# EUROPEAN PATENT SPECIFICATION

(11) **EP 0 856 660 B1**
(45) Date of publication and mention of the grant of the patent: **03.03.2004**
(21) Application number: 98200247.9
(22) Date of filing: 28.01.1998
(51) Int. Cl.: F03B 1/04, F03B 15/20, F03B 11/00, F16K 11/10, F16K 11/044

(54) **Three way valve for Pelton turbine control system**
Dreiwegventil für Peltonturbinensteuersystem
Soupape à trois voies pour système de contrôle de turbine Pelton

(30) Priority: 31.01.1997 IT MI970185
(43) Date of publication of application: 05.08.1998
(73) Proprietor: Voith Riva Hydro S.p.A., 20144 Milano (IT)
(72) Inventor: Meazza, Gianpiero, 20075 Lodi (IT); Rovaro Brizzi, Mario, 20145 Milano (IT)
(74) Representative: Zanardo, Giovanni

(56) References cited:
- CA-A- 1 058 056
- FR-A- 969 558
- US-A- 3 104 676
- US-A- 3 805 825
- US-A- 4 523 516
- US-A- 5 251 667
- "Die Freistrahlturbinen des kraftwerkes Sedrun." SCHWEIZERISCHE BAUZEITUNG, vol. 2, no. 80, 1 November 1962, pages 22-23, XP002065273

## Description

This invention relates to a hydraulic valve for controlling the regulator members of hydraulic turbines in general.

A valve representing the closest state of the art of the present invention is known from document US-A-5 251 667.

In the case of Pelton turbines, to improve water jet quality and hence the hydraulic turbine efficiency, the injectors in current systems are generally of direct type, ie with the controlling servomotor and the relative pin housed in an internal cylindrical member immersed in the water flowing to the nozzle.

This structure provides the best jet characteristics and hence maximum turbine efficiency. The servomotor is controlled from outside the penstock by pressurized oil which reaches it through conduits formed in the supports which fix the cylindrical member to the inside of the nozzle. The presence of pressurized oil within the injector cylindrical member located within the nozzle involves the danger of contamination notwithstanding the precision seal systems provided to prevent oil leakage into the water. The problem of preventing oil leakage into the water, ie its contamination by oil, cannot currently be solved definitively because of the considerable stress to which the seals are subjected by virtue of the high servomotor operating pressure imposed by the considerable forces acting on its pin and the small servomotor dimensions. Currently, therefore, to satisfactorily solve the oil contamination problem it has been considered to use water instead of oil, and preferably the actual water of the penstock. The use of pressurized water deriving directly from the penstock to control the hydraulic turbine regulator members has the advantage of radically solving the oil contamination problem while still having sufficient energy for movements even in an emergency, but unfortunately corrosion problems have arisen and in particular erosion of the active parts, particularly the passage regions of the control valve, because of the high-velocity flow of water containing sand and silt residues, which are always present in hydraulic systems.

The object of this invention is therefore to obviate the aforesaid drawbacks, by reducing the erosion effects to a minimum in order to make the use of water instead of oil a technical possibility.

This object is attained by a valve in accordance with claim 1, to which reference should be made for brevity.

Using pressurized water derived from the the penstock involves the problem of wear, as stated, and in particular wear of the control valve for the regulator members, by the effect of solid residues (sand and silt) present in the water, even if carefully filtered.

In the valve of this invention, the problem is solved by controlling pressure and flow by varying the throttling effect between two large surfaces, with the double advantage of reducing the flow velocity of the water in contact with the metal walls, and increasing their area and hence their erosion resistance, so ensuring a long life for the regulator valve.

The invention is illustrated by way of non-limiting example with reference to an electro-hydraulic system for controlling the regulator members of a Pelton turbine, and in particular to a hydraulic valve for controlling the regulator members of said Pelton turbine by means of said system.

Figure 1 is a section through a first embodiment of a three-way valve for controlling Pelton turbine regulator members in its "equilibrium position".

Figure 2 is a section through the valve of Figure 1 in a first configuration in which two of the three ways are in communication.

Figure 3 is a section through the valve of Figure 1 in a second configuration in which two of the three ways are in communication.

Figure 4 is a section through a second embodiment of a valve for controlling Pelton turbine regulator members.

Figure 5 is a section through a third embodiment of a valve for controlling Pelton turbine regulator members.

Figure 6 is a schematic illustration of a hydraulic system for controlling Pelton turbine regulator members, comprising a valve of the invention.

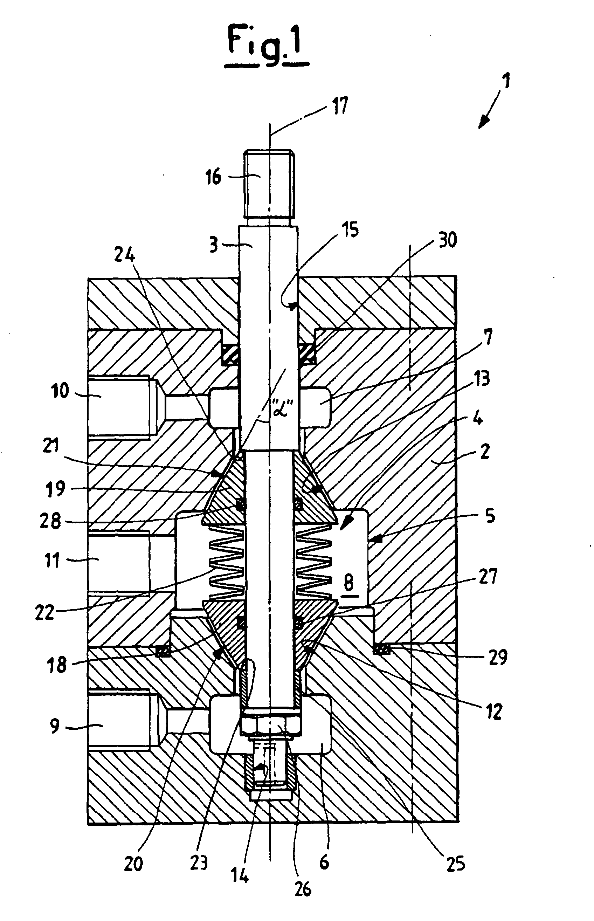

With reference to said figures, and in particular to Figures 1-3, the valve of the invention, indicated overall by 1, is a first embodiment of a valve for controlling the regulator members of a hydraulic turbine, in particular a Pelton turbine. The valve 1 is of the three-way type and comprises essentially a body 2, a stem 3 and a valving member 4. The body 2 has a central chamber 8 and two side chambers 6 and 7 connected hydraulically to the outside by respective ports 9-11. The chamber 8, connected to the user item, comprises a pair of fixed controlling and valving seats, namely a first 12 and a second 13, which are positioned between said central chamber 8 and the side chambers 6 and 7, of which one is connected to the pressure source and the other is connected to discharge. The valve also comprises a pair of bushes 14 and 15 for mechanically supporting the stem 3. The stem 3 mechanically supports the valving member 4 and has an outer end 16 which can be connected to operating means 50. The stem 3 is arranged to slide reciprocatingly within the relative bushes 14 and 15 provided in the valve body 2, in the direction of the axis of symmetry 17 of the stem 3/valving member 4 combination.

The valving member 4 is provided with two valving elements, namely a first 18 and a second 19, which carry a respective first movable valving seat 20 and a second movable valving seat 21, which are hence movable relative to the corresponding first fixed counter-seat 12 and second fixed counter-seat 13 provided on the valve body 2. Between the first valving element 18 and the second there are interposed preloaded elastic means which in the example are a group of cup springs 22. The first valving element 18 and second valving element 19 are consequently kept pressed against respective opposing shoulders provided on the stem 3, namely a first 23 and a second 24. The first shoulder 23 is obtained by applying coaxial to said stem an annular element 25 supported by a nut 26 screwed onto the stem 3. The second shoulder 24 is obtained by reducing the diameter of the stem 3.

According to one of the important characteristics of the invention the movable valving seats 20 and 21 and the fixed valving seats cut the axis of symmetry of the stem 3/valving member 4 combination at an angle α (which by convention is positive) and have the form of the lateral surface of a cone frustum. The angle of incidence of the movable valving seats 20 and 21 and fixed valving seats 12 and 13 can also be negative or opposite to the positive angle illustrated in Figures 1-3. The angle of incidence α can hence be of different width and can be positive or negative. In the specific cases shown in Figures 1-3 the movable valving seats 20-21 and fixed valving seats 12-13 cut the axis of symmetry 17 of the stem 3/valving member 4 combination at a positive angle a of about 30°. The valve 1 also comprises hydraulic seals. A first hydraulic seal 27 and a second hydraulic seal 28 are interposed between the stem 3 and the respective first valving element and second valving element 19. A third hydraulic seal 29 and a fourth hydraulic seal 30 are provided between the component parts of the body 2.

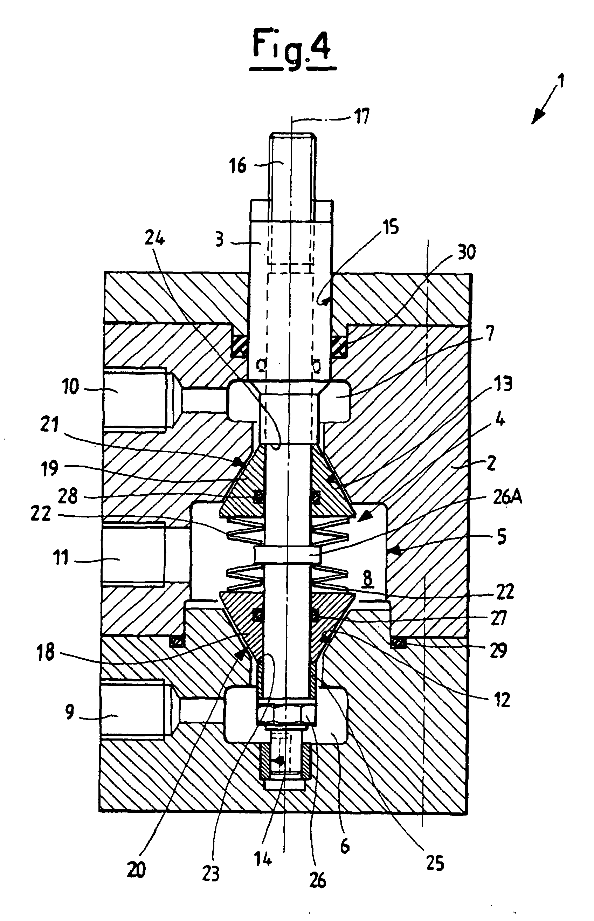

With particular reference to Figure 4 the valve illustrated is a second embodiment which differs from the first (Figures 1-3) in that the elastic means which act on the valving elements 18, 19 are divided into two groups by an intermediate annular shoulder 26A and in that the geometry of the valving member is such as to reduce the thrusts acting on the valving member.

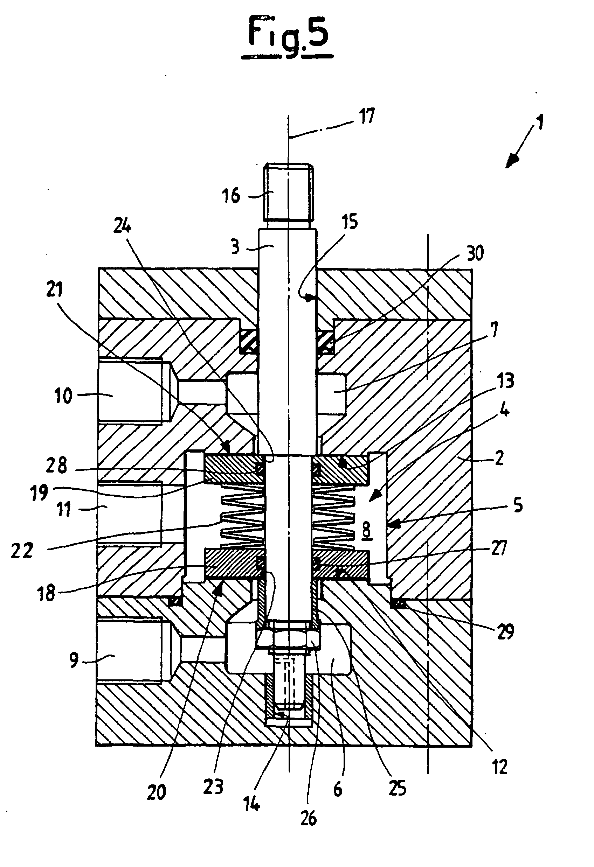

With particular reference to Figure 5, the valve illustrated is a third embodiment which differs from the first in that the movable valving seats 20 and 21 and the fixed valving seats 12 and 13 are perpendicular to the axis of symmetry 17 of the stem 3/valving member 4 combination, the angle α hence being 90°.

During its operation the valve 1 can assume the positions shown in Figures 1-3. In the configuration assumed in Figure 1, all three ports 9-11 of the valve 1 are in mutual hydraulic communication, modifiable by small axial movements, so enabling the pressure in the central chamber 8 connected to the user item to be controlled.

By acting on the stem 3 in the sense of pulling it (arrow F), the second movable valving seat 21 and the second fixed valving seat 13 engage to close the second port 10 and leave the remaining ports 11 and 9 in communication. By acting on the stem 3 in the sense of pushing it (arrow G), the first movable valving seat 20 and the first fixed valving seat 12 engage to close the first port 9 and leave the remaining ports 11 and 10 in communication.

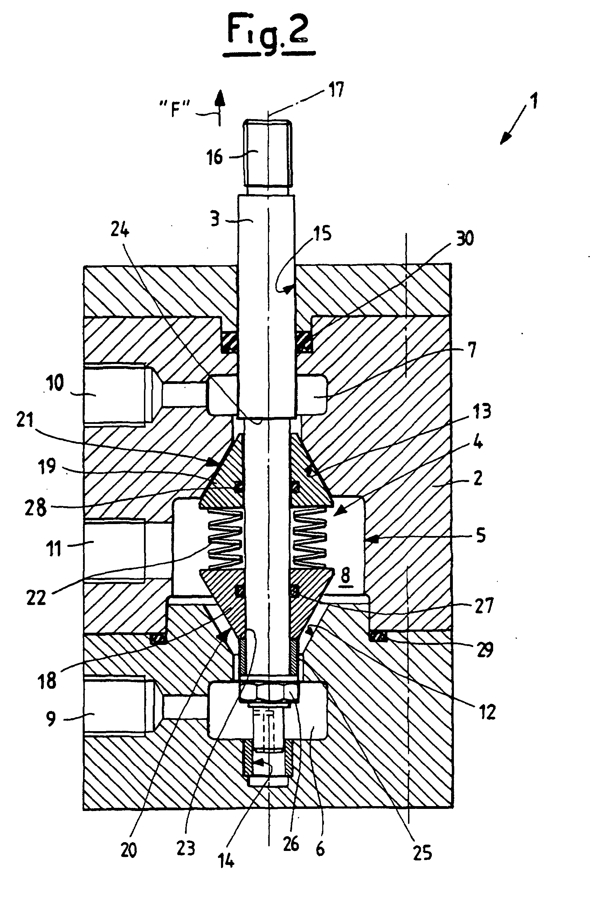

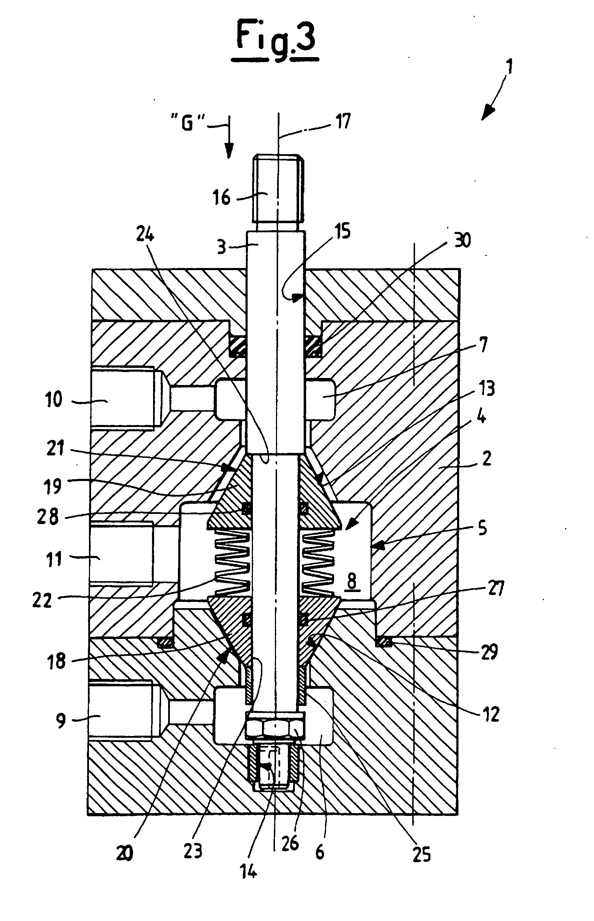

If a large-amplitude movement is required, the movement of the stem 3 in both directions can be increased by utilizing the compressibility of the springs 22. The ports which respectively form between the valving elements 18 and 19 and the seats 12 and 13 on the valve body consequently increase as shown in Figures 2 and 3. In Figure 2 the valve assumes a configuration such that the first port 9 and the central port 11 are in mutual hydraulic communication. In Figure 3 the valve 1 assumes a configuration such that the central port 11 and the second port 10 are in mutual hydraulic communication.

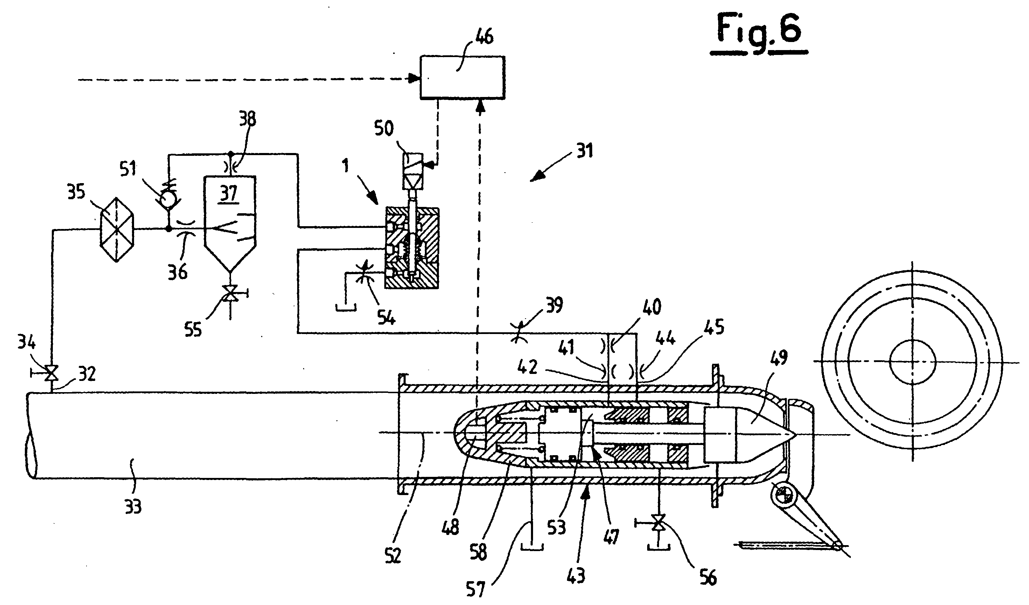

The hydraulic valve is preferably installed in an electro-hydraulic system for controlling hydraulic turbine regulator members, which is shown in Figure 6 and indicated overall by 31.

The system 31 comprises, upstream of said valve 1 and listed in the direction of water flow through them, the following items: a hydraulic connection 32 to the penstock 33, a valve 34 for closing this connection, a filter 35, a first throttle plate 36, a decanter device 37 and a second throttle plate 38. Downstream of the valve 1 and listed in the direction of water flow through them, the system 31 comprises the following items: a third, fourth and fifth throttle plate 39, 40, 41 respectively, a first hydraulic connection 42 to the injector 43, a sixth throttle plate 44 in parallel with the fourth and fifth throttle plates 40, 41, and a second hydraulic connection 45 to the injector 43. The system 31 also comprises an amplifier 46, an actuator 47 and a position transducer 48.

The amplifier 46 is arranged to compare an opening signal with a position signal originating from the position transducer 48 associated with the conical pin 49. The position transducer 48 and the conical pin 49 are housed in a cylindrical part 58 of the injector 43. The amplifier 49 emits a signal which is received by the operating means for the valve 1, ie an actuator 50 acting on the stem 3 of the hydraulic valve 1, with consequent operation of it. The system 31 comprises a valve 51 sized for a determined pressure drop, positioned in parallel with the decanter 37 upstream of the first throttle plate 36 and downstream of the second 38.

Within the cylindrical part 58 of the injector 43 there is mounted a conical pin 49 movable in the direction of the axis 52 with a natural tendency to close by the thrust of the water. The conical pin 49 can be opened by varying the pressure in the chamber of the actuator 47 under the control of the valve 1.

The valve 1 is operated by the actuator 50 controlled by the amplifier 46 on the basis of the error between the "request opening" signal and the "opening effected" signal provided by the position transducer 48. The water at controlled pressure is fed into the chamber 53 through the pipes with the relative throttle plates 40, 41 and 44. The throttle plates 39 and 54 allow the opening and closure times of the pin 49 to be regulated. All the water derived from the penstock 33 passes through the filter 35.

Assuming that the turbines are operated at nearly constant or slowly variable speed for most of the time and noting that the valve 1 has an extremely low leakage when under equilibrium conditions, an important characteristic of the system 31 is the provision of the decanter 37 which effectively separates any sand present in the low water throughput required at full working. In the case of greater water throughputs required for large or rapid valve movements, the decanter 37, protected by the throttle plates 36 and 38, is not disturbed because this greater throughput passes through the valve 51 sized for a determined pressure drop. The deposited sand can be periodically bled off by the drain cock 55.

Any leakages and impurities accumulated within the injector 43 are bled off via the pipe 57 and the second drain cock 56.

## Claims

1. A hydraulic valve (1) for controlling hydraulic turbine regulator members, of the three-way type comprising essentially a body (2), a stem (3) and a valving member (4), in which:
- the body (2) has a central chamber (8) and two side chambers, namely a first (6) and a second (7) connected hydraulically to the outside by respective ports (9-11), said chamber (8) also comprising a pair of fixed valving seats (12, 13) positioned between said central chamber (8) and the side chambers (6, 7);
- the stem (3), guided in bushes (14, 15), mechanically supports the valving member (4) and has an outer end (16) which can be connected to operating means (50), the stem (3) being arranged to slide reciprocatingly within the relative bushes (14,15) provided in the valve body (2), in the direction of the axis of symmetry (17) of the stem (3)/valving member (4) combination;
- the valving member (4) is provided with two valving elements (18, 19) carrying respective controlling and valving seats (20, 21), which are therefore movable relative to the corresponding counter-seats (12, 13) positioned on the body (2) of the valve (1),
- preloaded elastic means (22) are interposed between the valving elements (18, 19), which are therefore maintained pressed against opposing shoulders (23, 24) provided on the stem (3);
- the movable valving seats (20, 21) and fixed valving seats (12, 13) cut the axis of symmetry (17) of the stem (3)/valving member (4) combination at an angle α, preloaded elastic means interposed between the valving elements are cup springs (22),
**characterised in that** the elastic means are divided into two groups by an intermediate annular shoulder (26A).

2. A valve as claimed in claim 1, **characterised in that** the movable valving seats (20, 21) and fixed valving seats (12, 13) have the shape of a lateral surface of a cone frustum.

3. A valve as claimed in claim 2, **characterised in that** the angle of incidence is positive or negative.

4. A valve as claimed in claim 2, **characterised in that** the movable valving seats (20, 21) and fixed valving seats (12, 13) cut the axis of symmetry (17) of the stem (3)/valving member (4) combination at an angle α of about 30°.

5. A valve as claimed in claim 1, **characterised in that** the movable valving seats (20, 21) and fixed valving seats (12, 13) are perpendicular to the axis of symmetry (17) of the stem (3)/valving member (4) combination.

6. A valve as claimed in the preceding claims in an electro-hydraulic system (31) for controlling hydraulic turbine regulator members, **characterised by** comprising, in addition to said hydraulic valve (1):
- upstream of said valve (1) and listed in the direction of water flow through them: a hydraulic connection (32) to the penstock (33), a valve (34) for closing said connection, a filter (35), a first throttle plate (36), a decanter device (37) and a second throttle plate (38);
- downstream of said valve (1) and listed in the direction of water flow through them: a third throttle plate (39), a fourth throttle plate (40) and a fifth throttle plate (41), a first hydraulic connection (42) to the injector (43), a sixth throttle plate (44) in parallel with the fourth throttle plate (40) and the fifth throttle plate (41), and a second hydraulic connection (45) to the injector (43);
- an amplifier (46), an actuator (47) and a position transducer (48), said amplifier (46) being arranged to compare an opening signal with a position signal originating from the position transducer (48) associated with the conical pin (49), and to emit a signal for operating the actuator (50) acting on the stem (3) of the hydraulic valve (1).

7. A valve as claimed in claim 6 in an electro-hydraulic system (31) for controlling hydraulic turbine regulator members, **characterised in that** said system (31) comprises a valve (51) sized for a determined pressure drop and connected in parallel with the decanter device (37) upstream of the first throttle plate (36) and downstream of the second throttle plate (38).

## Patentansprüche

1. Hydraulikventil (1) zum Steuern von Regelelementen für eine hydraulische Turbine vom Dreiwege-Typ, umfassend im Wesentlichen einen Körper (2), einen Schaft (3) und ein Ventilstück (4), wobei:
- der Körper (2) eine Zentralkammer (8) und zwei Seitenkammern, nämlich eine erste (6) und eine zweite (7), aufweist, die hydraulisch mit der Außenseite über jeweilige Kanäle (9-11) verbunden sind, wobei die Kammer (8) auch ein Paar feste Ventilsitze (12, 13) umfasst, die zwischen der Zentralkammer (8) und den Seitenkammern (6, 7) angeordnet sind;
- der Schaft (3), der in Buchsen (14, 15) geführt ist, das Ventilstück (4) mechanisch trägt und ein äußeres Ende (16) aufweist, das mit einem Betätigungsmittel (50) verbunden sein kann, wobei der Schaft (3) derart ausgebildet ist, dass er innerhalb seiner zugehörigen, in dem Ventilkörper (2) vorgesehenen Buchsen (14, 15) in Richtung der Symmetrieachse (17) der Kombination aus Schaft (3) und Ventilstück (4) hin- und hergehend verschiebbar ist;
- das Ventilstück (4) mit zwei Ventilelementen (18, 19) versehen ist, die jeweils Steuer- und Ventilsitze (20, 21) tragen, welche daher relativ zu den entsprechenden Gegensitzen (12, 13), die an dem Körper (2) des Ventils (1) angeordnet sind, beweglich sind,
- vorbelastete, elastische Mittel (22) zwischen den Ventilelementen (18, 19) angeordnet sind, die daher unter Druck gegen an dem Schaft (3) vorgesehene, gegenüberliegende Schultern (23, 24) gehalten sind;
- die beweglichen Ventilsitze (20, 21) und festen Ventilsitze (12, 13) die Symmetrieachse (17) der Kombination aus Schaft (3) /Ventilstück (4) unter einem Winkel α schneiden, und die zwischen den Ventilelementen angeordneten, vorbelasteten, elastischen Mittel Tellerfedern (22) sind,
**dadurch gekennzeichnet, dass**
die elastischen Mittel durch eine dazwischen liegende, kreisringförmige Schulter (26A) in zwei Gruppen unterteilt sind.

2. Ventil nach Anspruch 1, **dadurch gekennzeichnet, dass** die beweglichen Ventilsitze (20, 21) und festen Ventilsitze (12, 13) die Form einer seitlichen Fläche eines Kegelstumpfes aufweisen.

3. Ventil nach Anspruch 2, **dadurch gekennzeichnet, dass** der Einfallwinkel positiv oder negativ ist.

4. Ventil nach Anspruch 2, **dadurch gekennzeichnet, dass** die beweglichen Ventilsitze (20, 21) und festen Ventilsitze (12, 13) die Symmetrieachse (17) der Kombination aus Schaft (3) und Ventilstück (4) unter einem Winkel α von ungefähr 30° schneiden.

5. Ventil nach Anspruch 1, **dadurch gekennzeichnet, dass** die beweglichen Ventilsitze (20, 21) und festen Ventilsitze (12, 13) senkrecht zur Symmetrieachse (17) der Kombination aus Schaft (3) und Ventilstück (4) stehen.

6. Ventil nach einem der vorhergehenden Ansprüche in einem elektrohydraulischen System (31) zum Steuern von Regelelementen einer hydraulischen Turbine, **dadurch gekennzeichnet, dass** es zusätzlich zu dem Hydraulikventil (1) umfasst:
- oberstromig von dem Ventil (1) und in der Richtung der Wasserströmung durch dieses aufgeführt: eine Hydraulikverbindung (32) mit der Druckleitung (33), ein Ventil (34) zum Schließen der Verbindung, einen Filter (35), eine erste Drosselklappe (36), eine Dekantiereinrichtung (37) und eine zweite Drosselklappe (38);
- unterstromig von dem Ventil (1) und in der Richtung der Wasserströmung durch dieses aufgeführt: eine dritte Drosselklappe (39), eine vierte Drosselklappe (40) und eine fünfte Drosselklappe (41), eine erste hydraulische Verbindung (42) mit der Einspritzvorrichtung (43), eine sechste Drosselklappe (44) parallel zu der vierten Drosselklappe (40) und der fünften Drosselklappe (41) und eine zweite hydraulische Verbindung (45) mit der Einspritzvorrichtung (43);
- einen Verstärker (46), ein Stellglied (47) und einen Positionswandler (48), wobei der Verstärker (46) derart ausgebildet ist, dass er ein Öffnungssignal mit einem von dem zu dem konischen Zapfen (49) gehörenden Positionswandler (48) ausgehenden Positionssignal vergleicht und ein Signal zur Betätigung des auf den Schaft (3) des Hydraulikventils (1) wirkenden Stellgliedes (50) aussendet.

7. Ventil nach Anspruch 6 in einem elektrohydraulischen System (31) zum Steuern von Regelelementen für eine hydraulische Turbine, **dadurch gekennzeichnet, dass** das System (31) ein Ventil (51) umfasst, das für einen bestimmten Druckabfall bemessen und parallel zu der Dekantiereinrichtung (37) oberstromig von der ersten Drosselklappe (36) und unterstromig von der zweiten Drosselklappe (38) geschaltet ist.

## Revendications

1. Vanne hydraulique (1) à trois voies pour contrôler des éléments de régulation d'une turbine hydraulique, comprenant essentiellement un corps (2), une tige (3) et un élément d'installation de vanne (4), dans laquelle :
- le corps (2) possède une chambre centrale (8) et deux chambres latérales, à savoir une première chambre (6) et une deuxième chambre (7) reliées hydrauliquement à l'extérieur par des ports respectifs (9 à 11), ladite chambre (8) comprenant également une paire de sièges de vanne fixes (12, 13) positionnés entre ladite chambre centrale (8) et les chambres latérales (6, 7);
- la tige (3), guidée dans des bagues (14, 15), supporte mécaniquement l'élément d'installation de vanne (4) et possède une extrémité extérieure (16) qui peut être reliée à un moyen d'actionnement (50), la tige (3) étant agencée pour coulisser de manière réciproque dans les bagues relatives (14, 15) prévues dans le corps de vanne (2), dans la direction de l'axe de symétrie (17) de la combinaison tige (3)/élément d'installation de vanne (4);
- l'élément d'installation de vanne (4) est muni de deux éléments d'installation de vanne (18, 19) portant des sièges respectifs de contrôle et d'installation de vanne (20, 21), qui sont par conséquent mobiles par rapport aux contre-sièges correspondants (12, 13) positionnés sur le corps (2) de la vanne (1);
- des moyens élastiques pré-chargés (22) sont interposés entre les éléments d'installation de vanne (18, 19), qui sont par conséquent maintenus appuyés contre des épaulements opposés (23, 24) prévus sur la tige (3);
- les sièges d'installation de vanne mobiles (20, 21) et les sièges d'installation de vanne fixes (12, 13) coupent l'axe de symétrie (17) de la combinaison tige (3)/élément d'installation de vanne (4) à un angle α,
- les moyens élastiques pré-chargés interposés entre les éléments d'installation de vanne sont des ressorts à rondelle (22),
**caractérisée en ce que** les moyens élastiques sont divisés en deux groupes par un épaulement annulaire intermédiaire (26A).

2. Vanne selon la revendication 1, **caractérisée en ce que** les sièges d'installation de vanne mobiles (20, 21) et les sièges d'installation de vanne fixes (12, 13) possèdent la forme d'une surface latérale d'un tronc de cône.

3. Vanne selon la revendication 2, **caractérisée en ce que** l'angle d'incidence est positif ou négatif.

4. Vanne selon la revendication 2, **caractérisée en ce que** les sièges d'installation de vanne mobiles (20, 21) et les sièges d'installation de vanne fixes (12, 13) coupent l'axe de symétrie (17) de la combinaison tige (3)/élément d'installation de vanne (4) à un angle α d'environ 30°.

5. Vanne selon la revendication 1, caractérisée ne ce que les sièges d'installation de vanne mobiles (20, 21) et les sièges d'installation de vanne fixes (12, 13) sont perpendiculaires à l'axe de symétrie (17) de la combinaison tige (3)/élément d'installation de vanne (4).

6. Vanne selon les revendications précédentes dans un système électro-hydraulique (31) pour contrôler des éléments de régulation d'une turbine hydraulique, caractérisée comme comprenant, en plus de ladite vanne hydraulique (1) :
- en amont de ladite vanne (1) et dans la direction de l'écoulement d'eau à travers ceux-ci : une liaison hydraulique (32) avec la conduite forcée (33), une vanne (34) pour fermer ladite liaison, un filtre (35), une première plaque d'étranglement (36), un dispositif décanteur (37) et une deuxième plaque d'étranglement (38);
- en aval de ladite vanne (1) et dans la direction de l'écoulement d'eau à travers ceux-ci : une troisième plaque d'étranglement (39), une quatrième plaque d'étranglement (40) et une cinquième plaque d'étranglement (41 ), une première liaison hydraulique (42) avec l'injecteur (43), une sixième plaque d'étranglement (44) parallèle à la quatrième plaque d'étranglement (40) et à la cinquième plaque d'étranglement (41), et une deuxième liaison hydraulique (45) avec l'injecteur (43);
- un amplificateur (46), un actionneur (47) et un transducteur de position (48), ledit amplificateur (46) étant agencé pour comparer un signal d'ouverture avec un signal de position provenant du transducteur de position (48) associé à la goupille conique (49), et pour émettre un signal pour enclencher l'actionneur (50) agissant sur la tige (3) de la vanne hydraulique (1).

7. Vanne selon la revendication 6 dans un système électro-hydraulique (31) pour contrôler des éléments de régulation d'une turbine hydraulique, **caractérisée en ce que** ledit système (31) comprend une vanne (51) possédant une taille correspondant à une chute de pression déterminée et reliée en parallèle au dispositif décanteur (37) en amont de la première plaque d'étranglement (36) et en aval de la deuxième plaque d'étranglement (38).
